# EUROPÄISCHE PATENTSCHRIFT

(11) **EP 3 374 660 B1**
(45) Veröffentlichungstag und Bekanntmachung des Hinweises auf die Patenterteilung: **08.04.2020**
(21) Anmeldenummer: 16797834.5
(22) Anmeldetag: 14.11.2016
(51) Int. Cl.: F16F 9/04, F16F 9/05

(54) **LUFTFEDEREINHEIT**
AIR SPRING UNIT
UNITÉ RESSORT PNEUMATIQUE

(30) Priorität: 12.11.2015 DE 102015119579
(43) Veröffentlichungstag der Anmeldung: 19.09.2018
(73) Patentinhaber: thyssenkrupp AG, 45143 Essen (DE); ThyssenKrupp Bilstein GmbH, 58256 Ennepetal (DE); Dunlop Systems and Components, Exhall, Coventry CV6 4QJ (GB)
(72) Erfinder: PRIESS, Jens, 46117 Oberhausen (DE); KAMPSCHULTE, Thomas, 57368 Lennestadt (DE); COOPER, Kyle, Roy, Lutterworth LE17 6NB (GB); ROSS, Christopher, David, Bedworth Warwickshire CV12 8DX (GB)
(74) Vertreter: Meissner Bolte Partnerschaft mbB
(86) Internationale Anmeldenummer: PCT/EP2016/077585
(87) Internationale Veröffentlichungsnummer: WO 2017/081319

(56) Entgegenhaltungen:
- WO-A1-2012/107283
- US-A- 6 123 325

## Beschreibung

Die vorliegende Erfindung betrifft eine Luftfeder für ein Fahrzeug, ein Luftfedermodul für eine Luftfeder, ein Verfahren zum Herstellen einer Luftfeder und ein Verfahren zum Herstellen eines Luftfedermoduls.

### Stand der Technik

Luftfedern sind im Stand der Technik in einer Vielzahl von Ausführungsformen bekannt. Für die Luftfederung eingesetzte Luftfedern basieren auf einem Federungssystem, das die Kompressibilität von Gasen, insbesondere von atmosphärischer Luft ausnutzt und auch als Volumenfederung bekannt ist. Bei der Volumenfederung beruht die Federwirkung auf Volumen und damit auf der Druckänderung des federnden Mediums, wie beispielsweise von Luft bei einer Luftfederung. Das federnde Medium ist von einem Behältnis, insbesondere einem Federbalg eingeschlossen, wobei durch von außen einwirkende fahrdynamische Kräfte, wie beispielsweise einem Einfedern eines Rades das Gas komprimiert wird, womit sich eine Volumenänderung ergibt. Somit erfolgt die Luftfederung insbesondere mittels Luftbälgen, in denen Druckluft beim schwankendem Druck die Gegenkraft zu den fahrdynamischen Kräften am jeweiligen Rad oder der Achse bildet. Des Weiteren kann mittels Luftfederung auch die Fahrzeughöhe variabel eingestellt werden und beispielsweise auch über Niveauregelungsventile der Druck in den Federn so geregelt werden, dass die Wagenhöhe unabhängig von der Belastung konstant bleibt. Bei Luftmangel senkt sich der Fahrzeugkasten auf eingebaute mechanische Notlauffedern. Ein Austausch von Luftfedern ist materialintensiv und zeitaufwendig. Des Weiteren sind die Abrollkolben meist aufwendig bearbeitet und angepasst, insbesondere mit einer Crimpkontur bearbeitet. Zudem ist die Einstellung der Federcharakteristik, wie beispielsweise die Federrate konventioneller Luftfedern sehr aufwendig beziehungsweise nachträglich nur sehr zeit- und kostenaufwendig veränderbar. Zudem können einzelnen Komponenten einer Luftfeder nur sehr kosten- und zeitaufwendig ausgetauscht werden. Des Weiteren sind im Stand der Technik bekannte Luftfederungen instabil gegen Querkräfte und oftmals auf Stabilisatoren für die Abstützung der Karosserie bei Kurvenfahrt und damit einer Erhöhung der Wankfederrate, angewiesen.

Aus der WO 2012/107 283 A1 ist eine Luftfeder mit einem Luftfederbalg und einem Abrollkolben bekannt, wobei der Luftfederbalg direkt mit dem Abrollkolben verbunden ist. Der Luftfederbalg kann mit einem Spannring an dem Abrollkolben befestigt werden.

Das Dokument US 6 123 325 A, welches als der nächstliegende Stand der Technik angesehen wird, offenbart die Merkmale der Oberbegriffe der Ansprüche 1 und 8.

Der vorliegenden Erfindung liegt daher die Aufgabe zugrunde eine verbesserte Luftfeder und/oder ein Luftfedermodul für Fahrzeuge und ein verbessertes Verfahren zum Herstellen einer Luftfeder und/oder eines Luftfedermoduls bereitzustellen, bei welchem die zuvor genannten Nachteile vermieden werden. Insbesondere soll mit dieser verbesserten Luftfeder und/oder dem Luftfedermodul eine einfache, schnelle, variable und variantenreiche Anbindung unterschiedlicher Abrollkolben, insbesondere von Abrollkoben mit unterschiedlichen Außenkonturen und somit die Einstellung/Bereitstellung unterschiedlicher Federcharakteristika, wie beispielsweise Federraten der Luftfeder ermöglicht werden. Zudem soll auch der Einsatz von Abrollkolben mit einem geringerem Fertigungsgrad, insbesondere mit einer fehlenden Crimpkontur ermöglicht werden. Des Weiteren soll mit diesem Luftfedermodul ein einfaches, schnelleres und zuverlässiges Anbringen von Luftfedermodulen an Abrollkolben gewährleistet sein. Zudem soll mit dem verbesserten Verfahren zum Herstellen einer Luftfeder und/oder eines Luftfedermoduls ein stabiler, beschädigungsunanfälligerer, vereinfachter und variantenreicher Herstellungsprozess zur Verfügung gestellt werden.

### Offenbarung der Erfindung

Diese Aufgabe wird mit einer Luftfeder nach Anspruch 1, einem Luftfedermodul nach Anspruch 7, einem Verfahren zum Herstellen einer Luftfeder nach Anspruch 8 und einem Verfahren zum Herstellen eines Luftfedermoduls nach Anspruch 9 gelöst.

Die erfindungsgemäße Luftfeder für ein Fahrzeug weist gegenüber konventionellen Luftfedern den Vorteil auf, dass das Luftfedermodul wieder lösbar mit dem Abrollkolben verbunden ist und damit eine kurzfristige Kombination/en des Luftfedermoduls mit einer Auswahl an unterschiedlichen Abrollkolben, aufweisend unterschiedliche wirksame Abrollkolbenflächen, möglich ist. Hierdurch sind viele Variationsmöglichkeiten an Federraten kurzfristig möglich. Zudem kann ein flexibles Baukastensystem realisiert und mit einer Vielzahl an Kombinationsmöglichkeiten mit einem oder mehreren Luftfedermodul/en mit den Abrollkolben unzählige Varianten an Luftfedern zur Verfügung gestellt werden. Des Weiteren ist ein modularer Austausch von Einzelkomponenten der Luftfeder schnell und einfach möglich. Zudem kann eine Standardisierung einzelner Komponenten, wie beispielsweise des Luftfedermoduls, realisiert werden.

Das erfindungsgemäße Luftfedermodul für ein Fahrzeug weist gegenüber konventionellen Luftfedern den Vorteil auf, dass mit dem erfindungsgemäßen Luftferdermodul ein flexibles Baukastensystem realisiert und eine Vielzahl an Kombinationsmöglichkeiten mit einem oder mehreren Luftfedermodul/en und den Abrollkolben unzählige Varianten an Luftfedern zur Verfügung gestellt werden.

Das erfindungsgemäße Verfahren zum Herstellen eines Luftfedermoduls und/oder einer Luftfeder weist gegenüber Verfahren zur Herstellung konventioneller Luftfedern den Vorteil auf, dass die kurzfristige Kombinationsmöglichkeit von Luftfedermodulen mit Abrollkolben und die Standardisierungsmöglichkeit von Einzelmodulen das Verfahren im Vergleich zum Stand der Technik variabler, flexibler und ggf. einheitlicher gestaltet und erst ermöglicht wird. Somit ist mit den erfindungsgemäßen Verfahren ein modulares Baukastensystem mit einer Vielzahl an Kombinations- und Variationsmöglichkeiten darstellbar.

Gegenstand der Erfindung ist daher eine Luftfeder für ein Fahrzeug, umfassend
- ein Luftfedermodul mit einem Luftfedermodulanschlusselement als Verbindungsteil mit der abzufedernden Last, insbesondere einer Fahrzeugkarosserie oder einer Achse des Fahrzeugs und einem Luftfedermodulbalg, wobei der Luftfedermodulbalg auf der dem Luftfedermodulanschlusselement zugewandten Seite mit dem Luftfedermodulanschlusselement wenigstens luftdicht verbunden ist,
- einen Abrollkolben,
wobei das Luftfedermodul zur wenigstens luftdichten Verbindung des Luftfedermoduls mit dem Abrollkolben mindestens ein Verbindungselement aufweist, wobei der Luftfedermodulbalg das Luftfedermodulanschlusselement mit dem Verbindungselement wenigstens luftdicht verbindend angeordnet ist und das Verbindungselement in wenigstens abschnittsweise direktunmittelbarem benachbart zuKontakt mit dem Abrollkolben angeordnet ist und das Verbindungselement auf den Abrollkolben aufgesetzt ist.

Ein weiterer Gegenstand der Erfindung ist ein Luftfedermodul für eine Luftfeder für ein Fahrzeug, umfassend
- ein Luftfedermodulanschlusselement als Verbindungsteil mit der abzufedernden Last, insbesondere einer Fahrzeugkarosserie oder einer Achse des Fahrzeugs und
- einen Luftfedermodulbalg, wobei der Luftfedermodulbalg auf der dem Luftfedermodulanschlusselement zugewandten Seite mit dem Luftfedermodulanschlusselement wenigstens luftdicht verbunden ist,
wobei das Luftfedermodul zur wenigstens luftdichten Verbindung des Luftfedermoduls mit einem Abrollkolben mindestens ein Verbindungselement aufweist, wobei der Luftfedermodulbalg das Luftfedermodulanschlusselement mit dem Verbindungselement wenigstens luftdicht verbindend angeordnet ist.

Ein weiterer Gegenstand der Erfindung ist ein Verfahren zum Herstellen einer Luftfeder (1) für ein Fahrzeug, umfassend die folgenden Schritte:
a) Bereitstellen eines Luftfedermoduls umfassend ein Luftfedermodulanschlusselement als Verbindungsteil mit der abzufedernden Last, insbesondere einer Fahrzeugkarosserie oder einer Achse des Fahrzeugs und einen Luftfedermodulbalg, wobei der Luftfedermodulbalg auf der dem Luftfedermodulanschlusselement zugewandten Seite mit dem Luftfedermodulanschlusselement wenigstens luftdicht verbunden ist;
b) Bereitstellen eines Abrollkolbens;
c) Verbinden des in Schritt a) bereitgestellten Luftfedermoduls mit dem in Schritt b) bereitgestellten Abrollkolben und Ausbilden einer wenigstens luftdichten Verbindung,
wobei das in Schritt a) bereitgestellte Luftfedermodul ein Verbindungselement aufweist, wobei das Verbindungselement an dem Luftfedermodulbalg auf der dem Abrollkolben zugewandten Seite angeordnet ist und an dem Verbindungselement eine oder mehrere Führungsrippe(n) angeordnet ist/sind und das Verbinden in Schritt c) durch ein wenigstens abschnittsweise unmittelbar benachbartes Verbindungselement zu dem luftfedermodulseitigen Abrollkolbenende durchgeführt wird.

Ein weiterer Gegenstand der Erfindung ist ein Verfahren zum Herstellen eines Luftfedermoduls für ein Fahrzeug, umfassend das Bereitstellen eines Luftfedermoduls umfassend ein

Luftfedermodulanschlusselement als Verbindungsteil mit der abzufedernden Last, insbesondere einer Fahrzeugkarosserie oder einer Achse des Fahrzeugs und einen Luftfedermodulbalg, wobei der Luftfedermodulbalg auf der dem Luftfedermodulanschlusselement zugewandten Seite mit dem Luftfedermodulanschlusselement wenigstens luftdicht verbunden ist;
wobei das bereitgestellte Luftfedermodul ein Verbindungselement aufweist, wobei das Verbindungselement an dem Luftfedermodulbalg auf der dem Luftfedermodulanschlusselement abgewandten Seite angeordnet ist und zwischen dem Luftfedermodulbalg und dem Verbindungselement eine wenigstens luftdichte Verbindung hergestellt wird.

Ein weiterer Gegenstand der Erfindung ist die Verwendung eines Luftfedermoduls und/oder einer Luftfeder für ein Fahrzeug, insbesondere für einen Schwingungsdämpfer, Niveauregler und Kombinationen hiervon, umfassend
- ein Luftfedermodul mit einem Luftfedermodulanschlusselement als Verbindungsteil mit der abzufedernden Last, insbesondere einer Fahrzeugkarosserie oder einer Achse des Fahrzeugs und einem Luftfedermodulbalg, wobei der Luftfedermodulbalg auf der dem Luftfedermodulanschlusselement zugewandten Seite mit dem Luftfedermodulanschlusselement wenigstens luftdicht verbunden ist,
- einen Abrollkolben,
wobei das Luftfedermodul zur wenigstens luftdichten Verbindung des Luftfedermoduls mit dem Abrollkolben mindestens ein Verbindungselement aufweist, wobei der Luftfedermodulbalg auf der dem Abrollkolben zugewandten Seite an dem Verbindungselement angeordnet ist und das Verbindungselement wenigstens abschnittsweise unmittelbar benachbart zu dem Abrollkolben angeordnet ist und das Verbindungselement auf den Abrollkolben aufgesetzt ist.

Die Erfindung kann sowohl in der Luftfeder für ein Fahrzeug als auch in einem Luftfedermodul für eine Luftfeder verwirklicht sein.

### Detaillierte Beschreibung der Erfindung

Im Rahmen der vorliegenden Erfindung wird unter einem Luftfedermodulanschlusselement ein Element verstanden, welches das Luftfedermodul wenigstens wirktechnisch mit der abzufedernden Last, insbesondere einer Fahrzeugkarosserie oder einer Achse des Fahrzeugs verbindet. Beispielsweise weist ein Luftfedermodulanschlusselement Bohrungen und/oder Ösen auf über welche das Luftfedermodulanschlusselement mit Steck- und/oder Schraubverbindungen mit der Fahrzeugkarosserie oder einer Achse des Fahrzeugs verbunden ist.
In einer bevorzugten Ausführungsform der Erfindung ist an dem Luftfedermodulanschlusselement ein Stützlager angeordnet, welches das Luftfedermodul wenigstens wirktechnisch mit der abzufedernden Last, insbesondere einer Fahrzeugkarosserie oder einer Achse des Fahrzeugs verbindet.

Unter wenigstens luftdicht wird im Rahmen der vorliegenden Erfindung eine Dichtigkeit wenigstens für ein erdatmosphärisches Gasgemisch verstanden. Beispielsweise umfasst ein erdatmosphärisches trockenes Gasgemisch eine Luftzusammensetzung von rund 78 Vol.-% Stickstoff, rund 21 Vol.-% Sauerstoff und rund 1 Vol.-% Edelgas(en). Zusätzlich können geringe Anteile an Kohlenstoffdioxid und Spuren von anderen Gasen mit umfasst sein. Des Weiteren kann das erdatmosphärische Gasgemisch bei feuchter Luftzusammensetzung auch Anteile von Wasser, insbesondere in gasförmigen Aggregatzustand als Wasserdampf umfassen. Sind bei dem erdatmosphärischen Gasgemisch flüssige Anteile, insbesondere von Wasser umfasst, so umfasst wenigstens luftdicht eine Fluiddichtigkeit.

Unter einem Abrollkolben wird im Rahmen der vorliegenden Erfindung ein Kolben mit einer Außenkontur verstanden, auf welcher der Luftfedermodulbalg bei Feder-, insbesondere Einfedervorgängen abrollen kann. Die Geometrie der Außenkontur hat direkten Einfluss auf die Einstellung der Federcharakteristik, wie beispielsweise die Federrate. Beispielsweise kann ein Kolben ausgewählt sein als ein Hohlkolben, ein Stab, ein Rohr, insbesondere ein Dämpferrohr und Kombinationen hiervon. An der dem Luftfedermodulbalg abgewandten Seite des Abrollkolbens ist dieser in einem eingebauten Zustand der Luftfeder wirktechnisch mit der abzufedernden Last, insbesondere einer Fahrzeugkarosserie oder einer Achse des Fahrzeugs verbunden.

Im Rahmen der vorliegenden Erfindung wird unter aufgesetzt insbesondere eingesteckt, hineinreicht, hinein ragt, aufgesteckt, aufgesetzt, umschließt, umschlingt, umspannt, umklemmt, und Kombinationen hiervon verstanden.

Unter unmittelbar benachbart ist im Rahmen der vorliegenden Erfindung auch ein direkter Kontakt von einzelnen Elementen, insbesondere der direkte Kontakt eines Verbindungselements mit dem Abrollkolben umfasst.

Im Rahmen der vorliegenden Erfindung werden unter einem Schwingungsdämpfer Systeme zur Dämpfung von mechanischen Schwingungen, wie beispielsweise Vibrationen, Erschütterungen, Stößen und Kombinationen hiervon verstanden. Insbesondere wird bei mit einer mechanischen Schwingung beaufschlagten Schwingungsdämpfern Bewegungsenergie, insbesondere Schwingungsenergie in Wärmeenergie umgewandelt. Im Bereich der Fahrzeugtechnik finden Schwingungsdämpfer insbesondere in Fahrwerken von Kraftfahrzeugen Einsatz und werden üblicherweise als (Fahrzeug)Stoßdämpfer bezeichnet. Diese (Fahrzeug)Stoßdämpfer arbeiten frequenzunabhängig und benötigen ein "ruhendes" Gegenstück, wie beispielsweise eine Karosserie und werden insbesondere auch als Reibungsbremsen bezeichnet.

In einer weiteren Ausführungsform der Erfindung ist die unmittelbare benachbarte Anordnung des auf den Abrollkolben aufgesetzten Verbindungselements eine wieder lösbare Verbindung. Insbesondere ist die wieder lösbare Verbindung eine wenigstens formschlüssige Verbindung. Beispielsweise ist die wieder lösbare Verbindung ausgewählt aus einer Gruppe von einer Steckverbindung, einer Klemmverbindung, einer Schraubverbindung, einer Rastverbindung, insbesondere einer Schnappverbindung, einer Bajonettverbindung und Kombinationen hiervon.

In einer weiteren Ausführungsform der Erfindung greift das Verbindungselement in das luftfedermodulseitige Abrollkolbenende ein, insbesondere ragt in das luftfedermodulseitige Abrollkolbenende hinein.

In einer weiteren Ausführungsform der Erfindung ist das Verbindungselement auf das luftfedermodulseitige Abrollkolbenende aufgesteckt, insbesondere umschließt das Abrollkolbenende wenigstens teilweise.

In einer weiteren Ausführungsform der Erfindung ist das Verbindungselement mit mindestens einem Fixierelement an dem Abrollkolben wieder lösbar fixiert, wobei das mindestens eine Fixierelement eine von der Längsachse des Abrollkolbens abweichende Wirkrichtung aufweist.

In einer weiteren Ausführungsform der Erfindung ist in dem Bereich zwischen dem zu dem luftfedermodulseitigen Abrollkolbenende wenigstens abschnittsweise unmittelbar benachbarten Verbindungselement und dem luftfedermodulseitigen Abrollkolbenende wenigstens ein Dichtungselement angeordnet. Das Dichtelement stellt eine wenigstens luftdichte Verbindung zwischen dem luftfedermodulseitigen Abrollkolbenende und dem Verbindungselement her und ist insbesondere aus im Stand der Technik bekannten statischen Dichtungen ausgewählt, deren Dichtelemente keinen Relativbewegungen, wie beispielsweise einer Abdichtung einer rotierenden Welle gegenüber einem statischen Gehäuse, ausgesetzt sind. Erfindungsgemäße Dichtungen sind beispielsweise ausgewählt aus der Gruppe von Flachdichtungen, Profildichtungen, Muffendichtungen, Dichtungsmassen, Dichtringen, insbesondere O-Ringen, Gummidichtringen, Kautschukdichtringen, Polymerdichtringen und Kombinationen hiervon.

In einer weiteren Ausführungsform der Erfindung ist das wenigstens eine Dichtungselement an dem Verbindungselement und/oder dem luftfedermodulseitigen Abrollkolbenende angeordnet.

In einer weiteren Ausführungsform der Erfindung ist/sind an dem Verbindungselement eine oder mehrere Führungsrippe(n) angeordnet, welche eine wirktechnische Verbindung mit dem luftfedermodulseitigen Abrollkolbenende ausbilden und den Abrollkolben in Querrichtung zu der Längsachse des Luftfedermoduls stabilisieren, insbesondere bei der Anordnung eines Dämpferrohres an dem Abrollkolben. Alternative oder weitere Stabilisierungsmöglichkeiten sind beispielsweise an dem Abrollkolben angeordnete Kappe(n), Hülse(n) und/oder Ring(e) sowie Kombinationen hiervon. Die Stabilisierungsmöglichkeiten stabilisieren den Abrollkolben, insbesondere ein an dem Abrollkolben angeordnetes Dämpferrohr gegen ein Wegknicken bei eingebrachten Querkräften.

Vorzugsweise weist das Verbindungselement eine rotationssymmetrische, insbesondere ringförmige Wandung auf. Die Führungsrippen sind auf dem Umfang der Wandung verteilt angeordnet. Die Führungsrippen erstrecken sich ausgehend von der Wandung radial nach innen. Dadurch wird ein kompaktes Verbindungselement geschaffen, das für die Modulbauweise geeignet und mit verschiedenen Formen von Abrollkolben kombinierbar ist. Die radiale Erstreckung der Führungsrippen nach innen nutzt den zur Verfügung stehenden Bauraum im Inneren des Verbindungselements optimal aus, sodass die Steifigkeit des Gesamtsystems signifikant verbessert wird, ohne dass dabei der Außendurchmesser vergrößert wird.

In einer weiteren bevorzugten Ausführungsform sind die Führungsrippen paarweise gegenüber angeordnet. Dadurch wird die Aufnahme und Ableitung von Querkräften begünstigt.

Das Verbindungselement kann 4 bis 12 Führungsrippen, insbesondere 6 bis 10 Führungsrippen aufweisen. Die Anzahl der Führungsrippen hängt von den Dimensionen des Verbindungselements bzw. des Abrollkolbens und den Lastsituationen ab, auf die der Abrollkolben bzw. das Verbindungselement ausgelegt sind.

Bei einer weiteren bevorzugten Ausführungsform sind die Führungsrippen zumindest abschnittsweise, insbesondere im Wesentlichen vollständig im montierten Zustand im Abrollkolben angeordnet. Mit anderen Worten ist die Wandung des Verbindungselements, an der die Führungsrippen befestigt sind, im Abrollkolben angeordnet. Konkret kann dabei der Abrollkolben einen Aufnahmeabschnitt aufweisen, insbesondere einen zylindrischen Aufnahmeabschnitt, der im montierten Zustand das Verbindungselement aufnimmt. Die Führungsrippen sind in etwa auf der Höhe des Aufnahmeabschnitts des Abrollkolben angeordnet. Dadurch wird erreicht, dass die Querkräfte im Bereich der Verbindung zwischen dem Abrollkolben und dem Verbindungselement sicher aufgenommen werden.

Vorzugsweise ist das Verbindungselement mit dem Aufnahmeabschnitt kraftschlüssig verbunden bzw. verpresst. Konkret wird die Haltekraft durch die Dichtung bzw. die Dichtungen zwischen dem Verbindungselement und dem Aufnahmeabschnitt erzeugt. Bei der Montage wird das Verbindungselement gesteckt. Zwischen dem Verbindungselement und dem Aufnahmeabschnitt besteht eine Spielpassung. Dies reduziert die Fügekräfte erheblich. Die im Betrieb der Luftfeder erzeugten Federkräfte verhindern wirktechnisch ein Herausziehen des Verbindungselements.

Das Verbindungselement kann also auf dem Außenumfang eine Dichtung aufweisen, die im montierten Zustand am Innendurchmesser des Aufnahmeabschnitts anliegt.

Bei einer besonders bevorzugten Ausführungsform stehen die Führungsrippen über das im montierten Zustand im Abrollkolben angeordnete Ende des Verbindungselements, insbesondere der Wandung axial vor. Der axial vorstehende Abschnitt der Führungsrippen dient als Einführhilfe bei der Montage des Verbindungselements. Die Führungsrippen führen das Verbindungselement, wenn das Verbindungselement in den Abrollkolben, insbesondere den Aufnahmeabschnitt des Abrollkolbens eingepasst wird.

Dabei können die Führungsrippen auf der radial außen liegenden Seite (Außenkante) gekrümmt, insbesondere konkav gekrümmt sein. Dadurch wird ein Verkanten beim Einführen des Verbindungselements sicher vermieden. Konkret ist der über die Wandung in axialer Richtung vorstehende Teil der Führungsrippen gekrümmt ausgebildet.

Auf der radial innen liegenden Seite (Innenkante) können die Führungsrippen mit einer geraden Kante ausgebildet sein. Die gerade Kanten bzw. die gerade Innenkanten der Führungsrippen dienen als Anlage für ein konzentrisch im Abrollkolben angeordnetes Dämpfungsrohr. Damit wird eine besonders gute Stabilisierung bei der Einleitung von Querkräften erreicht.

In einer weiteren Ausführungsform der Erfindung sind das Verbindungselement und das Luftfedermodulanschlusselement auf einer Wirkachse einander gegenüberliegend angeordnet, wobei die Wirkachse auch eine parallele Achse zu der Längsachse des Abrollkolbens umfasst.

In einer weiteren Ausführungsform der Erfindung weist das Luftfedermodul wenigstens ein Außenführungselement auf, wobei das Außenführungselement den Luftfedermodulbalg wenigstens teilweise ummantelt.

In einer weiteren Ausführungsform der Erfindung ist der Luftfedermodulbalg auf der dem Luftfedermodulanschlusselement abgewandten Seite an dem Verbindungselement angeordnet. Auch hier gilt analog, dass die Führungsrippen im Zusammenhang mit einem Dämpferrohr und/oder einer Dämpferkappe im Abrollkolben zusammenwirken, so dass eine Ableitung der Kräfte auf das Dämpferrohr und/oder die Dämpferkappe ermöglicht wird

In einer weiteren Ausführungsform der Erfindung greift mit dem Verbinden in Schritt c) das Verbindungselement in das luftfedermodulseitige Abrollkolbenende ein, insbesondere wird das Verbindungselement in das luftfedermodulseitige Abrollkolbenende eingesteckt.

In einer weiteren Ausführungsform der Erfindung wird mit dem Verbinden in Schritt c) das Verbindungselement (5) auf das luftfedermodulseitige Abrollkolbenende aufgesteckt, insbesondere umschließt das Abrollkolbenende wenigstens teilweise.

### Kurze Beschreibung der Zeichnungen

Das erfindungsgemäße Luftfedermodul einer erfindungsgemäßen Luftfeder für ein Fahrzeug wird anhand der Zeichnungen erläutert.
Fig. 1 zeigt schematisch einen Längsschnitt einer Luftfeder nach dem Stand der Technik,
Fig. 2 zeigt schematisch einen Längsschnitt eines zu einer Luftfeder einsteckbaren Luftfedermoduls und Abrollkolbens gemäß einer Ausführungsform der Erfindung,
Fig. 3 zeigt schematisch einen Längsschnitt eines zu einer Luftfeder aufsteckbaren Luftfedermoduls und Abrollkolbens gemäß einer Ausführungsform der Erfindung,
Fig. 4 zeigt schematisch einen Längsschnitt eines zu einer Luftfeder einsteckbaren Luftfedermoduls mit Dichtungselementen, einem Außenführungselement und eines Abrollkolbens gemäß einer Ausführungsform der Erfindung.

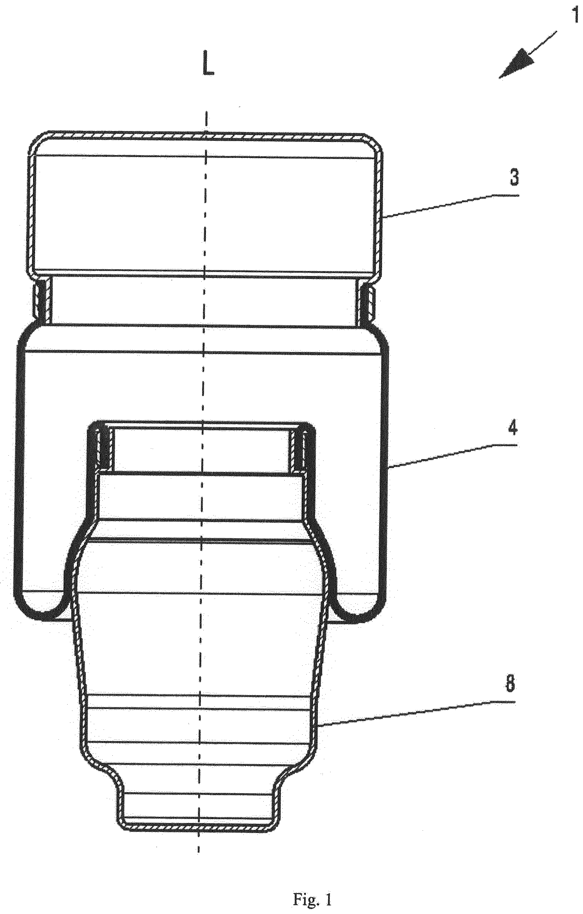

In der Fig. 1 ist ein Längsschnitt einer Luftfeder 1, umfassend ein Luftfedermodulanschlusselement 3 zur Verbindung mit einer abzufedernden Last, insbesondere einer Fahrzeugkarosserie oder einer Achse des Fahrzeugs, einen Luftfedermodulbalg 4 und einen Abrollkolben 8 nach dem Stand der Technik dargestellt. Der Luftfedermodulbalg 4 ist auf der dem Luftfedermodulanschlusselement 3 abgewandten Seite in direktem Kontakt mit dem Abrollkolben 8 und insbesondere über eine Rohrschelle mit dem Abrollkolben 8 verbunden.

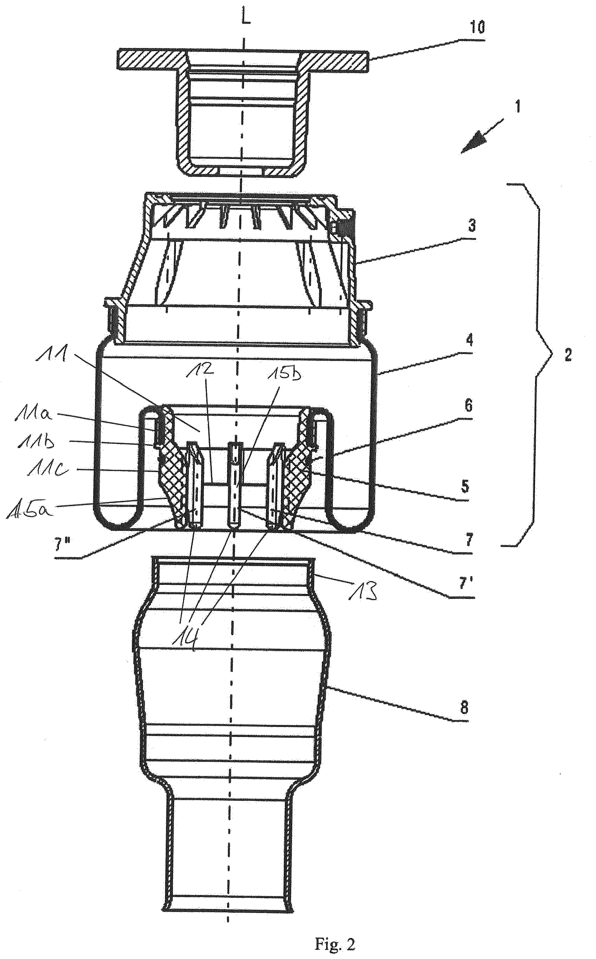

In der Fig. 2 ist ein Längsschnitt einer erfindungsgemäßen demontierten Luftfeder 1, umfassend ein Luftfedermodul 2 und den Abrollkolben 8 dargestellt. Das Luftfedermodul 2 umfasst das Luftfedermodulanschlusselement 3, den Luftfedermodulbalg 4 und ein Verbindungselement 5. Zur Verbindung des Luftfedermoduls 2 mit der abzufedernden Last, insbesondere der Fahrzeugkarosserie oder einer Achse des Fahrzeugs ist an dem Luftfedermodulanschlusselement 3, ein Stützlager 10 angeordnet. Der Luftfedermodulbalg 4 ist luftdicht zwischen dem Luftfedermodulanschlusselement 3 und dem Verbindungselement 5 angeordnet. Auf der dem Luftfedermodulbalg 4 abgewandten Seite kann das Luftfedermodulanschlusselement 3 an der abzufedernden Last angeordnet werden. Das Verbindungselement 5 des Luftfedermoduls 2 kann zur Herstellung einer Luftfeder 1 mit dem Abrollkolben 8 beispielsweise über eine Steckverbindung, wie dargestellt, wenigstens luftdicht aber wieder lösbar verbunden werden. Der Abrollkolben 8 weist eine Außenkontur auf. An dem Verbindungselement 5 ist zur Gewährleistung einer wenigstens luftdichten Verbindung ein Dichtungselement 6 angeordnet. Zudem sind an dem Verbindungselement 5 für eine zusätzliche Abstützung gegen Querkräfte mehrere Führungsrippen 7, 7', 7" angeordnet.

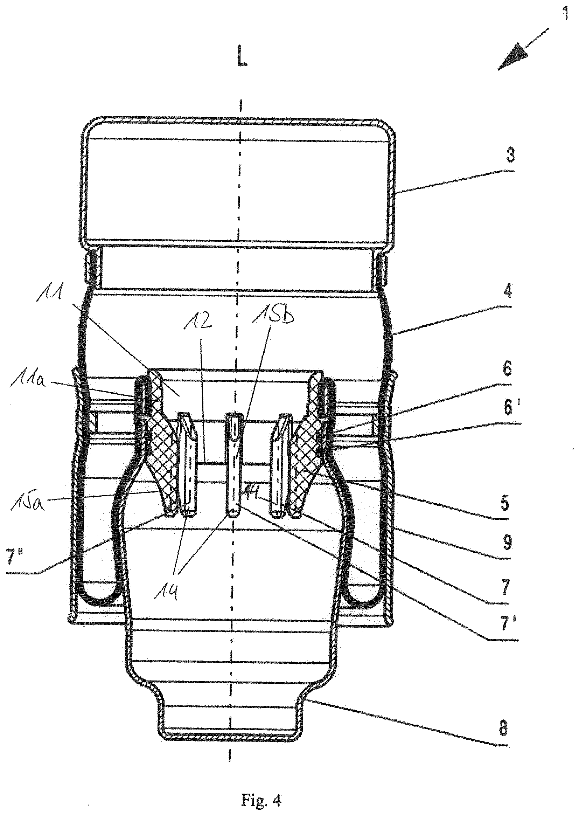

Wie in den Figuren 2 und 4 gut zu erkennen, sind die Führungsrippen 7, 7', 7" auf dem Umfang des Verbindungselements 5 verteilt angeordnet und zwar so, dass die Führungsrippen 7, 7', 7" paarweise gegenüber angeordnet sind. Die Führungsrippen 7, 7', 7" erstrecken sich dabei radial nach innen. Das Verbindungselement 5 weist eine Wandung 11 auf, die ringförmig ausgebildet ist. Die Wandung 11 umfasst einen ersten Ringabschnitt 11a und einen zweiten Ringabschnitt 11c. Der ersten Ringabschnitt 11a ist mit dem Luftfedermodulbalg 4 verbunden. Am zweiten Ringabschnitt 11c sind die Führungsrippen 7, 7', 7" befestigt. Zwischen dem ersten und zweiten Ringabschnitt 11a, 11c ist auf dem Außenumfang der Wandung 11 ein umlaufender Bund 11b ausgebildet, der im montierten Zustand einen Anschlag bildet, an dem der Abrollkolben 8 anliegt (Fig. 4).

Die Wandung 11, konkret der zweite Ringabschnitt 11c bildet eine Unterkante 12, über die die Führungsrippen 7, 7', 7" in axialer Richtung vorstehen. Die axial vorstehenden Abschnitte 14 der Führungsrippen 7, 7', 7" bilden eine Einführhilfe, die die Montage des Verbindungselements 5 und des Abrollkolben 8 erleichtert. Dazu sind die Außenkanten 15a der Führungsrippen 7, 7', 7" gekrümmt, insbesondere konkav gekrümmt ausgebildet. Die Innenkanten 15b sind gerade ausgebildet.

Im montierten Zustand ist der zweite Ringabschnitt 11c in einen zylindrischen Aufnahmeabschnitt 13 des Abrollkolbens 8 eingeführt, sodass die Oberkante des Aufnahmeabschnitts 13 am Bund 11b des Verbindungselements 5 anliegt. Der Aufnahmeabschnitt 13 und der zweite Ringabschnitt 11c des Verbindungselements 5 sind kraftschlüssig verbunden, insbesondere verpresst. Wie in Fig. 4 gut zu erkennen, sind die Führungsrippen 7, 7', 7", konkret der am zweiten Ringabschnitt 11c befestigte Teil der Führungsrippen 7, 7', 7" auf der Höhe des Aufnahmeabschnitts 13 angeordnet, sodass auftretende Querkräfte gut abgeleitet werden können.

Die axial vorstehenden Abschnitte 14 der Führungsrippen 7, 7', 7" haben den weiteren Vorteil, dass diese die Kraftableitungsfläche für die Querkräfte radial nach innen auf ein (nicht gezeigtes) Dämpferrohr bzw. eine Dämpferkappe vergrößern. Das Dämpferrohr liegt dabei an den Innenkanten 15b an.

Bei den Ausführungsbeispielen gemäß Figuren 2 und 4 sind 8 Führungsrippen 7, 7', 7" vorgesehen. Eine andere Anzahl, beispielsweise 6 oder 10 Führungsrippen 7, 7', 7" sind möglich.

Bei einer fertig montierten Luftfeder 1 sind auf einer Längsachse L das Luftfedermodul 2 verbunden mit dem Abrollkolben 8 angeordnet und bei einem Einfeder-Vorgang rollt der an dem Verbindungselement 5 angeordnete Luftfedermodulbalg 4 wenigstens teilweise auf der Außenkontur des Abrollkolben 8 ab, wobei die sich in dem Luftfedermodulbalg 4 befindende Luft komprimiert wird. Die Federrate der Luftfeder 1 kann beispielsweise über die Außenkontur des Abrollkolbens 8 eingestellt werden.

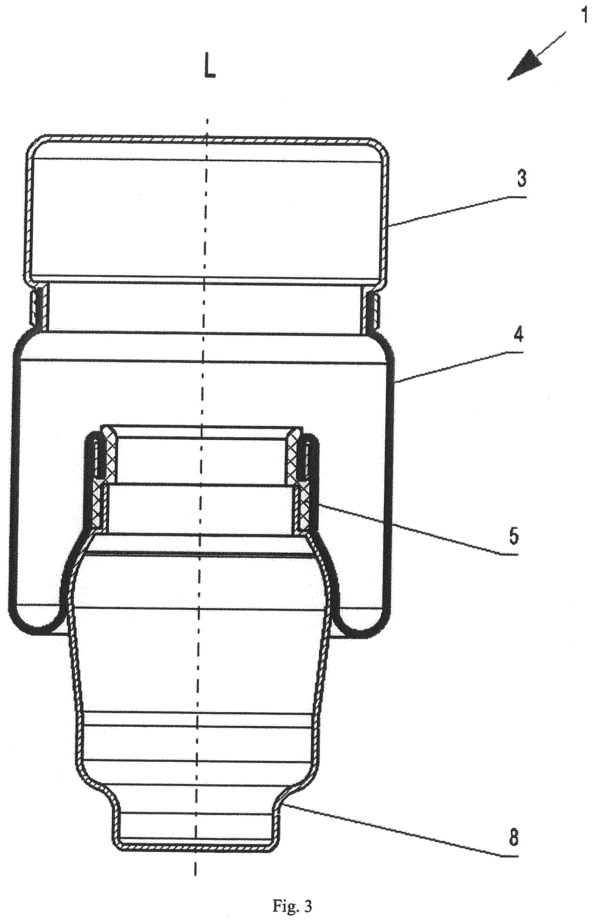

In der Fig. 3 ist ein Längsschnitt des zur Luftfeder 1 auf den Abrollkolben 8 aufgesteckten Luftfedermoduls unter Ausbildung einer geschlossenen Luftfeder 1 gemäß einer Ausführungsform der Erfindung dargestellt.

In der Fig. 4 ist ein Längsschnitt des zur Luftfeder 1 in den Abrollkolben 8 eingesteckten Luftfedermoduls unter Ausbildung einer geschlossenen Luftfeder 1 gemäß einer Ausführungsform der Erfindung dargestellt. An dem Verbindungselement 5 sind zwei Dichtelemente 6, 6' für eine wenigstens luftdichte Verbindung zwischen dem Verbindungselement 5 und dem Abrollkolben 8 angeordnet. Zusätzlich ist der Luftfedermodulbalg 4 wenigstens im Bereich zwischen dem sich gegenüberliegendem Luftfedermodulanschlusselement 3 und dem Verbindungselement 5 mit einem Außenführungselement 9 ummantelt, womit der Luftfedermodulbalg 4 baulichen Umgebungsbedingungen angepasst werden kann.

### Gewerbliche Anwendbarkeit

Luftfedern für ein Fahrzeug als auch Luftfedermodule für Luftfedern sowie ein Verfahren zum Herstellen einer Luftfeder der vorbeschriebenen Art werden in der Produktion von Fahrzeugen, insbesondere von Fahrwerken von Kraftfahrzeugen eingesetzt.

### Bezugszeichenliste

- 1: = Luftfeder
- 2: = Luftfedermodul
- 3: = Luftfedermodulanschlusselement
- 4: = Luftfedermodulbalg
- 5, 5', 5": = Verbindungselement(e)
- 6, 6': = Dichtungselement(e)
- 7, 7', 7": = Führungsrippe(n)
- 8: = Abrollkolben
- 9: = Außenführungselement
- 10: = Stützlager
- 11: Wandung
- 11a: erster Ringabschnitt
- 11b: Bund
- 11c: zweiter Ringabschnitt
- 12: Unterkante
- 13: Aufnahmeabschnitt
- 14: vorstehende Abschnitte der Führungsrippen
- 15a: Außenkante
- 15b: Innenkante

- L: = Längsachse

## Patentansprüche

1. Luftfeder (1) für ein Fahrzeug, umfassend
- ein Luftfedermodul (2) mit einem Luftfedermodulanschlusselement (3) als Verbindungsteil mit der abzufedernden Last und einem Luftfedermodulbalg (4), wobei der Luftfedermodulbalg (4) auf der dem Luftfedermodulanschlusselement (3) zugewandten Seite mit dem Luftfedermodulanschlusselement (3) wenigstens luftdicht verbunden ist,
- einen Abrollkolben (8),
wobei das Luftfedermodul (2) zur wenigstens luftdichten Verbindung des Luftfedermoduls (2) mit dem Abrollkolben (8) mindestens ein Verbindungselement (5) aufweist, wobei der Luftfedermodulbalg (4) luftdicht verbindend zwischen dem Luftfedermodulanschlusselement (3) und dem Verbindungselement (5) angeordnet ist,
**dadurch gekennzeichnet, dass**
das Verbindungselement (5) wenigstens abschnittsweise unmittelbar benachbart zu dem Abrollkolben (8) angeordnet ist und das Verbindungselement (5) auf den Abrollkolben (8) aufgesetzt ist und wobei an dem Verbindungselement (5) eine oder mehrere Führungsrippe(n) (7) angeordnet ist/sind, welche eine wirktechnische Verbindung mit dem luftfedermodulseitigen Abrollkolbenende ausbilden und das Luftfedermodul (2) in Querrichtung zu der Längsachse (L) des Abrollkolbens (8) stabilisieren.

2. Luftfeder (1) nach Anspruch 1, **dadurch gekennzeichnet, dass** die unmittelbar benachbarte Anordnung des auf den Abrollkolben (8) aufgesetzten Verbindungselements (5) eine wieder lösbare Verbindung ist.

3. Luftfeder (1) nach einem der vorherigen Ansprüche 1 bis 2, **dadurch gekennzeichnet, dass** das Verbindungselement (5) in das luftfedermodulseitige Abrollkolbenende eingreift, insbesondere in das luftfedermodulseitige Abrollkolbenende hineinragt.

4. Luftfeder (1) nach einem der vorherigen Ansprüche 1 bis 3, **dadurch gekennzeichnet, dass** das Verbindungselement (5) auf das luftfedermodulseitige Abrollkolbenende aufgesteckt ist, insbesondere das Abrollkolbenende wenigstens teilweise umschließt.

5. Luftfeder (1) nach einem der vorherigen Ansprüche 1 bis 4, **dadurch gekennzeichnet, dass** in dem Bereich zwischen dem zu dem luftfedermodulseitigen Abrollkolbenende wenigstens abschnittsweise unmittelbar benachbarten Verbindungselement (5) und dem luftfedermodulseitigen Abrollkolbenende wenigstens ein Dichtungselement (6) angeordnet ist.

6. Luftfeder (1) nach einem der vorherigen Ansprüche 1 bis 5, **dadurch gekennzeichnet, dass** das Luftfedermodul (2) wenigstens ein Außenführungselement (9) aufweist, wobei das Außenführungselement (9) den Luftfedermodulbalg (4) wenigstens teilweise ummantelt.

7. Luftfedermodul (2) für eine Luftfeder (1) für ein Fahrzeug, umfassend
- ein Luftfedermodulanschlusselement (3) als Verbindungsteil mit der abzufedernden Last und
- einen Luftfedermodulbalg (4), wobei der Luftfedermodulbalg (4) auf der dem Luftfedermodulanschlusselement (3) zugewandten Seite mit dem Luftfedermodulanschlusselement (3) wenigstens luftdicht verbunden ist, wobei das Luftfedermodul (2) zur wenigstens luftdichten Verbindung des Luftfedermoduls (2) mit einem Abrollkolben (8) mindestens ein Verbindungselement (5) aufweist, wobei der Luftfedermodulbalg (4) luftdicht verbindend zwischen dem Luftfedermodulanschlusselement (3) und dem Verbindungselement (5) angeordnet ist,
**dadurch gekennzeichnet, dass** an dem Verbindungselement (5) mehrere Führungsrippen (7, 7', 7") angeordnet sind.

8. Verfahren zum Herstellen einer Luftfeder (1) für ein Fahrzeug, umfassend die folgenden Schritte:
a) Bereitstellen eines Luftfedermoduls (2) umfassend ein Luftfedermodulanschlusselement (3) als Verbindungsteil mit der abzufedernden Last, insbesondere einer Fahrzeugkarosserie oder einer Achse des Fahrzeugs und einen Luftfedermodulbalg (4), wobei der Luftfedermodulbalg (4) auf der dem Luftfedermodulanschlusselement (3) zugewandten Seite mit dem Luftfedermodulanschlusselement (3) wenigstens luftdicht verbunden ist;
b) Bereitstellen eines Abrollkolbens (8);
c) Verbinden des in Schritt a) bereitgestellten Luftfedermoduls (2) mit dem in Schritt b) bereitgestellten Abrollkolben (8) und Ausbilden einer wenigstens luftdichten Verbindung,
**dadurch gekennzeichnet, dass**
das in Schritt a) bereitgestellte Luftfedermodul (2) ein Verbindungselement (5) aufweist, wobei das Verbindungselement (5) an dem Luftfedermodulbalg (4) auf der dem Abrollkolben (8) zugewandten Seite angeordnet ist und an dem Verbindungselement (5) eine oder mehrere Führungsrippe(n) (7) angeordnet ist/sind und das Verbinden in Schritt c) durch ein wenigstens abschnittsweise unmittelbar benachbartes Verbindungselement (5) zu dem luftfedermodulseitigen Abrollkolbenende durchgeführt wird, wobei mit dem Verbinden in Schritt c) das Verbindungselement (5) in das luftfedermodulseitige Abrollkolbenende eingreift.

9. Verfahren zum Herstellen eines Luftfedermoduls (2) für ein Fahrzeug, umfassend das Bereitstellen eines Luftfedermoduls (2) umfassend ein Luftfedermodulanschlusselement (3) als Verbindungsteil mit der abzufedernden Last und einen Luftfedermodulbalg (4), wobei der Luftfedermodulbalg (4) auf der dem Luftfedermodulanschlusselement (3) zugewandten Seite mit dem Luftfedermodulanschlusselement (3) wenigstens luftdicht verbunden ist,
**dadurch gekennzeichnet, dass**
das bereitgestellte Luftfedermodul (2) ein Verbindungselement (5) aufweist, wobei an dem Verbindungselement (5) mehrere Führungsrippen (7, 7', 7") angeordnet sind und das Verbindungselement (5) an dem Luftfedermodulbalg (4) auf der dem Luftfedermodulanschlusselement (3) abgewandten Seite angeordnet ist und zwischen dem Luftfedermodulbalg (4) und dem Verbindungselement (5) eine wenigstens luftdichte Verbindung hergestellt wird.

10. Verwendung eines Luftfedermoduls (2) und/oder einer Luftfeder (1) für ein Fahrzeug, umfassend
- ein Luftfedermodul (2) mit einem Luftfedermodulanschlusselement (3) als Verbindungsteil mit der abzufedernden Last, insbesondere einer Fahrzeugkarosserie oder einer Achse des Fahrzeugs und einem Luftfedermodulbalg (4), wobei der Luftfedermodulbalg (4) auf der dem Luftfedermodulanschlusselement (3) zugewandten Seite mit dem Luftfedermodulanschlusselement (3) wenigstens luftdicht verbunden ist,
- einen Abrollkolben (8),
**dadurch gekennzeichnet, dass**
das Luftfedermodul (2) zur wenigstens luftdichten Verbindung des Luftfedermoduls (2) mit dem Abrollkolben (8) mindestens ein Verbindungselement (5) aufweist, wobei an dem Verbindungselement (5) mehrere Führungsrippen (7, 7', 7") angeordnet sind und der Luftfedermodulbalg (4) auf der dem Abrollkolben (8) zugewandten Seite an dem Verbindungselement (5) angeordnet ist und das Verbindungselement (5) wenigstens abschnittsweise unmittelbar benachbart zu dem Abrollkolben (8) angeordnet ist und das Verbindungselement (5) auf den Abrollkolben (8) aufgesetzt ist.

## Claims

1. An air spring (1) for a motor vehicle, comprising
- an air-spring module (2) with an air-spring-module connection element (3) as a connecting part with the load to be cushioned and an air-spring-module bellow (4), wherein the air-spring-module bellow (4) is connected at least to the air-spring module connection element (3) on the side facing the air-spring-module connection element (3) in an airtight manner,
- a rolling piston (8),
wherein the air-spring module (2) comprises at least one connection element (5) for the at least airtight connection of the air-spring module(2) to the rolling piston (8), wherein the air-spring-module bellow (4) is arranged between the air-spring-module connection element (3) and the connection element (5), thereby connecting in an airtight manner,
**characterized in that**
the connection element (5) is arranged directly adjacent to the rolling piston (8) at least in sections and the connection element (5) is placed onto the rolling piston (8), and wherein one or a plurality of guide rib(s) (7) is/are arranged on the connection element (5), which form an efficient connection to the air-spring-module-side rolling piston end and stabilize the air-spring module (2) in the transverse direction to the longitudinal axis (L) of the rolling piston (8).

2. The air spring (1) according to Claim 1, **characterized in that** the immediately adjacent arrangement of the connection element (5) placed onto the rolling piston (8) is a detachable connection.

3. The air spring (1) according to any of the previous Claims 1 to 2, **characterized in that** the connection element (5) engages into the air-spring-module-side rolling piston end, in particular, projecting into the air-spring-module-side rolling piston end.

4. The air spring (1) according to any of the previous Claims 1 to 3, **characterized in that** the connection element (5) is attached onto the air-spring-module-side rolling piston end, in particular, at least partially enclosing the rolling piston end.

5. The air spring (1) according to any of the previous Claims 1 to 4, **characterized in that** at least one seal element (6) is arranged in the region between the connection element (5) located directly adjacent to the air-spring-module-side rolling piston end at least in sections and the air-spring-module-side rolling piston.

6. The air spring (1) according to any of the previous Claims 1 to 5, **characterized in that** the air-spring module (2) has at least one outer guide element (9), wherein the outer guide element (9) at least partially encases the air-spring-module bellow (4).

7. An air-spring module (2) for an air spring (1) for a motor vehicle, comprising
- an air-spring-module connection element (3) as a connecting part to the load to be cushioned and
- an air-spring-module bellow (4), wherein the air-spring-module bellow (4) is connected to the air-spring-module connection element (3) on the side facing the air-spring-module connection element (3) in at least an airtight manner, wherein the air-spring module (2) comprises at least one connection element (5) for the at least airtight connection of the air-spring module (2) to the rolling piston (8), wherein the air-spring-module bellow (4) is arranged between the air-spring-module connection element (3) and the connection element (5), thereby connecting in an airtight manner.
**characterized in that**
a plurality of guide ribs (7, 7', 7") are arranged on the connection element (5).

8. A method for manufacturing an air spring (1) for a motor vehicle, comprising the following steps:
a) providing an air-spring module (2) comprising an air-spring-module connection element (3) as a connecting part to the load to be cushioned, in particular, to a motor vehicle body or an axle of the motor vehicle and an air-spring-module bellow (4), wherein the air-spring-module bellow (4) is connected to the air-spring-module connection element (3) in at least an airtight manner on the side facing the air-spring-module connection element (3);
b) providing a rolling piston (8);
c) connecting the air-spring module (2) provided at step a) to the rolling piston (8) provided at step b) and forming a connection that is at least airtight,
**characterized in that**
the air-spring module (2) provided at step a) has a connection element (5), wherein the connection element (5) is arranged on the air-spring-module bellow (4) on the side facing the rolling piston (8) and one or a plurality of guide rib(s) (7) is/are arranged on the connection element (5), and the connecting at step c) is carried out by means of a connection element (5), which is directly adjacent to the air-spring-module-side rolling piston at least in sections, wherein, upon connecting at step c), the connection element (5) engages into the air-spring-module-side rolling piston end.

9. A method for the manufacturing an air-spring module (2) for a motor vehicle, entailing providing an air-spring module (2), comprising an air-spring-module connection element (3) as a connecting part to the load to be cushioned and an air-spring-module bellow (4), wherein the air-spring-module bellow (4) is connected to the air-spring-module connection element (3) on the side facing the air-spring-module connection element (3) in at least an airtight manner,
**characterized in that**
the provided air-spring module (2) comprises a connection element (5), wherein a plurality of guide ribs (7, 7', 7") are arranged on the connection element (5), and the connection element (5) is arranged on the air-spring-module bellow (4) on the side facing away from the air-spring-module connection element (3) and a connection, which is at least airtight, is established between the air-spring-module bellow (4) and the connection element (5).

10. Use of an air-spring module (2) and/or an air spring (1) for a motor vehicle, comprising
- an air-spring module (2) with an air-spring-module connection element (3) as a connecting part to the load to be cushioned, in particular, a motor-vehicle body or an axle of the motor vehicle and an air-spring-module bellow (4), wherein the air-spring-module bellow (4) is connected to the air-spring-module connection element (3) on the side facing the air-spring-module connection element (3) in at least an airtight manner,
- a rolling piston (8),
**characterized in that**
the air-spring module (2) comprises at least one connection element (5) for the at least airtight connection of the air-spring module (2) to the rolling piston (8), wherein a plurality of guide ribs (7, 7', 7") are arranged on the connection element (5), and the air-spring-module bellow (4) is arranged on the connection element (5) on the side facing the rolling piston (8) and the connection element (5) is arranged directly adjacent to the rolling piston (8) at least in sections and the connection element (5) is placed onto the rolling piston (8).

## Revendications

1. Ressort pneumatique (1) destiné à un véhicule, comprenant
- un module de ressort pneumatique (2), doté d'un élément de raccordement de module de ressort pneumatique (3) faisant office de pièce de liaison avec la charge qui doit être amortie et d'un soufflet de module de ressort pneumatique (4), sur la face dirigée vers l'élément de raccordement de module de ressort pneumatique (3), le soufflet de module de ressort pneumatique (4) étant relié au moins de manière étanche à l'air avec l'élément de raccordement de module de ressort pneumatique (3),
- un piston de déroulage (8),
pour la liaison au moins étanche à l'air du module de ressort pneumatique (2) avec le piston de déroulage (8), le module de ressort pneumatique (2) comportant au moins un élément de liaison (5), le soufflet de module de ressort pneumatique (4) étant placé en assurant une liaison étanche à l'air entre l'élément de raccordement de module de ressort pneumatique (3) et l'élément de liaison (5),
**caractérisé en ce**
**qu'**au moins par endroits, l'élément de liaison (5) est placé au voisinage direct du piston de déroulage (8) et l'élément de liaison (5) est posé sur le piston de déroulage (8) et sur l'élément de liaison (5) étant placée(s) une ou plusieurs nervure(s) de guidage (7), lesquelles forment une liaison techniquement active avec l'extrémité du piston de déroulage du côté du module de ressort pneumatique et stabilisent le module de ressort pneumatique (2) dans la direction transversale par rapport à l'axe longitudinal (L) du piston de déroulage (8).

2. Ressort pneumatique (1) selon la revendication 1, **caractérisé en ce que** le placement directement voisin de l'élément de liaison (5) posé sur le piston de déroulage (8) est une liaison amovible.

3. Ressort pneumatique (1) selon l'une quelconque des revendications précédentes 1 à 2, **caractérisé en ce que** l'élément de liaison (5) s'engage dans l'extrémité du piston de déroulage du côté du module de ressort, notamment saillit à l'intérieur de l'extrémité du piston de déroulage du côté du module de ressort.

4. Ressort pneumatique (1) selon l'une quelconque des revendications précédentes 1 à 3, **caractérisé en ce que** l'élément de liaison (5) est emboîté sur l'extrémité du piston de déroulage du côté du module de ressort pneumatique, notamment entoure au moins partiellement l'extrémité du piston de déroulage.

5. Ressort pneumatique (1) selon l'une quelconque des revendications précédentes 1 à 4, **caractérisé en ce que** dans la région entre l'élément de liaison (5) au moins directement voisin par endroits avec l'extrémité du piston de déroulage du côté du module de ressort pneumatique et l'extrémité du piston de déroulage du côté du module de ressort pneumatique est placé au moins un élément d'étanchéité (6).

6. Ressort pneumatique (1) selon l'une quelconque des revendications précédentes 1 à 5, **caractérisé en ce que** le module de ressort pneumatique (2) comporte au moins un élément de guidage externe (9), l'élément de guidage externe (9) enveloppant au moins partiellement le soufflet de module de ressort pneumatique (4).

7. Module de ressort pneumatique (2), pour un ressort pneumatique (1) destiné à un véhicule, comprenant
- un élément de raccordement de module de ressort pneumatique (3), faisant office de pièce de liaison avec la charge qui doit être amortie, et
- un soufflet de module de ressort pneumatique (4), sur la face dirigée vers l'élément de raccordement de module de ressort pneumatique (3), le soufflet de module de ressort pneumatique (4) étant relié au moins de manière étanche à l'air avec l'élément de raccordement de module de ressort pneumatique (3), pour la liaison au moins étanche à l'air du module de ressort pneumatique (2) avec un piston de déroulage (8), le module de ressort pneumatique (2) comportant au moins un élément de liaison (5), le soufflet de module de ressort pneumatique (4) étant placé en assurant une liaison étanche à l'air entre l'élément de raccordement de module de ressort pneumatique (3) et l'élément de liaison (5),
**caractérisé en ce que**
sur l'élément de liaison (5) sont placées plusieurs nervures de guidage (7, 7', 7").

8. Procédé de fabrication d'un ressort pneumatique (1) destiné à un véhicule, comprenant les étapes suivantes, consistant à :
a) mettre à disposition un module de ressort pneumatique (2) comprenant un élément de raccordement de module de ressort pneumatique (3), faisant office de pièce de liaison avec la charge qui doit être amortie, notamment une carrosserie du véhicule ou un axe du véhicule et un soufflet de module de ressort pneumatique (4), sur la face dirigée vers l'élément de raccordement de module de ressort pneumatique (3), le soufflet de module de ressort pneumatique (4) étant relié au moins de manière étanche à l'air avec l'élément de raccordement de module de ressort pneumatique (3) ;
b) mettre à disposition un piston de déroulage (8) ;
c) relier le module de ressort pneumatique (2) mis à disposition dans l'étape a) avec le piston de déroulage (8) mis à disposition dans l'étape b) et créer une liaison au moins étanche à l'air,
**caractérisé en ce que**
le module de ressort pneumatique (2) mis à disposition dans l'étape a) comporte un élément de liaison (5), l'élément de liaison (5) étant placé sur le soufflet de module de ressort pneumatique (4), sur la face dirigée vers le piston de déroulage (8) et sur l'élément de liaison (5) étant placée(s) une ou plusieurs nervure(s) de guidage) (7), et la liaison dans l'étape c) étant réalisée par un élément de liaison (5) directement voisin au moins par endroits vers l'extrémité du piston de déroulage du côté du module de ressort pneumatique, par la liaison dans l'étape c), l'élément de liaison (5) saillant à l'intérieur de l'extrémité du piston de déroulage du côté du module de ressort pneumatique.

9. Procédé de fabrication d'un module de ressort pneumatique (2) destiné à un véhicule, comprenant la mise à disposition d'un module de ressort pneumatique (2) comprenant un élément de raccordement de module de ressort pneumatique (3) faisant office de pièce de liaison avec la charge qui doit être amortie et un soufflet de module de ressort pneumatique (4), sur la face dirigée vers l'élément de raccordement de module de ressort pneumatique (3), le soufflet de module de ressort pneumatique (4) étant relié au moins de manière étanche à l'air avec l'élément de raccordement de module de ressort pneumatique (3),
**caractérisé en ce que**
le module de ressort pneumatique (2) mis à disposition comporte un élément de liaison (5), sur l'élément de liaison (5) étant placée(s) une ou plusieurs nervure(s) de guidage (7, 7', 7") et l'élément de liaison (5) étant placé sur le soufflet de module de ressort pneumatique (4), sur la face opposée à l'élément de raccordement de module de ressort pneumatique (3) et entre le soufflet de module de ressort pneumatique (4) et l'élément de liaison (5) étant créée une liaison au moins étanche à l'air.

10. Utilisation d'un module de ressort pneumatique (2) et/ou d'un ressort pneumatique (1) destiné(s) à un véhicule, comprenant
- un module de ressort pneumatique (2) comprenant un élément de raccordement de module de ressort pneumatique (3), faisant office de pièce de liaison avec la charge qui doit être amortie, notamment une carrosserie du véhicule ou un axe du véhicule et un soufflet de module de ressort pneumatique (4), sur la face dirigée vers l'élément de raccordement de module de ressort pneumatique (3), le soufflet de module de ressort pneumatique (4) étant relié au moins de manière étanche à l'air avec l'élément de raccordement de module de ressort pneumatique (3),
- un piston de déroulage (8),
**caractérisé en ce que**
pour la liaison au moins étanche à l'air du module de ressort pneumatique (2) avec le piston de déroulage (8), le module de ressort pneumatique (2) comporte au moins un élément de liaison (5), sur l'élément de liaison (5) étant placée(s) une ou plusieurs nervure(s) de guidage (7, 7', 7") et le soufflet de module de ressort pneumatique (4) étant placé sur l'élément de liaison (5), sur la face dirigée vers le piston de déroulage (8) et l'élément de liaison (5) étant placé au moins par endroits au voisinage direct du piston de déroulage (8) et l'élément de liaison (5) étant posé sur le piston de déroulage (8).
